# EUROPÄISCHE PATENTSCHRIFT

(11) **EP 1 479 722 B1**
(45) Veröffentlichungstag und Bekanntmachung des Hinweises auf die Patenterteilung: **08.03.2006**
(21) Anmeldenummer: 04011145.2
(22) Anmeldetag: 11.05.2004
(51) Int. Cl.: C08L 23/00, C08K 5/00, C08K 5/34, C08K 5/3492, C08L 61/00

(54) **Thermoplastisch verformbares Kompositmaterial und Verfahren zu dessen Herstellung**
Thermoplastic deformable composite material and process for preparation
Matériel thermoplastique deformable et procédé de préparation

(30) Priorität: 12.05.2003 DE 10321219
(43) Veröffentlichungstag der Anmeldung: 24.11.2004
(73) Patentinhaber: Fraunhofer-Gesellschaft zur Förderung der angewandten Forschung e.V., 80686 München (DE)
(72) Erfinder: Bonatz, Eckhard, Dr. rer. nat., 14513 Teltow (DE); Börmer, Frank, Dr. rer. nat., 14129 Berlin (DE); Rafler, Gerald, Dr. habil., 14473 Potsdam (DE); Remde, Helmut, Dipl.-Phys., 14480 Potsdam (DE)

(56) Entgegenhaltungen:
- DE-A- 19 808 325
- US-A- 5 482 985
- US-A- 5 859 109

## Beschreibung

Die Erfindung betrifft ein thermoplastisch verformbares Kompositmaterial nach dem Oberbegriff des Hauptanspruchs sowie ein Verfahren zu dessen Herstellung nach dem Oberbegriff-des Anspruchs 8.

Thermoplastisch verformbare und duromere Polymerwerkstoffe weisen signifikante Unterschiede in ihren Verarbeitungs- und Materialeigenschaften auf. Während thermoplastisch verformbare Polymerwerkstoffe problemlos aus schmelzflüssiger Phase zu verarbeiten sind und durch eine hohe Zug- und Biegefestigkeit sowie Dehnbarkeit charakterisiert sind, weisen duromere Netzwerkpolymere oder Duroplaste hohe Elastizitätsmoduln bei geringer Dehnbarkeit auf. Duroplaste haben eine nachteilige, strukturbedingte Sprödigkeit und sind schwierig zu verarbeiten, wobei wegen einer Abgabe von Spaltprodukten in der Regel füllstoffhaltige Form- oder Pressmassen auf der Basis niedermolekularer Prepolymere in eine Anwendungsform gebracht werden müssen, um dann bei erhöhter Temperatur ausgehärtet zu werden. Bei thermoplastischen Massenkunststoffen dagegen bereiten eine häufig unzureichende Wärmeformbeständigkeit und eine leichte Brennbarkeit, insbesondere ein mit einem Schmelzen bei Hitzeeinwirkung einhergehendes Ablösen brennender Schmelztropfen Probleme und beschränkt in vielen Fällen eine Anwendung derartiger Kunststoffe.

Durch Füllstoffe und Verstärkungsmaterialien können diese aus einer im Wesentlichen linearkettigen Struktur der Thermoplaste bedingten Nachteile gegenüber vernetzten Duromeren erfolgreich überwunden werden. Verarbeitungserschwerungen durch eine erhöhte Abrasivität an entsprechenden Compoundier- und Verarbeitungsmaschinen oder eine mangelnde Wiederverwertbarkeit werden bei einem Einsatz von Füll- oder Verstärkungsmaterialien bewusst in Kauf genommen, um einen wirtschaftlich effizienten Einsatz von Thermoplasten in vielen volkswirtschaftlich bedeutenden Bereichen zu ermöglichen. Als Füll- oder Verstärkungsmaterialien werden bislang vorzugsweise anorganische Komponenten wie Carbonate, Silikate oder Alumosilikate in Form von feinteiligen Pulvern bzw. von Fasern eingesetzt, die eine ausreichende thermische Stabilität aufweisen und darüber hinaus eine reduzierte massebezogene Brandlast eines fertigen Werkstoffs bewirken. Füllstoffe werden dabei vorzugsweise als sphärische Partikel eines Durchmessers von zwischen etwa'5 *µ*m und 100 *µ*m appliziert. Es ist jedoch auch ein Einsatz plättchenförmiger Zusätze bekannt. In ähnlicher Weise können auch bei Verstärkungsfasern Form und Geometrie in weiten Grenzen variieren. Wie bei den Füllstoffen dominieren auch bei den aus Fasern bestehenden Verstärkungsmaterialien anorganische Stoffe. Lediglich bei hochpreisigen High-Tech-Produkten werden auch Kohlestofffasern zur Eigenschaftsoptimierung von Thermoplastmaterialien eingesetzt, jedoch bei weitem nicht in einem von Hochleistungsduromeren bekannten Umfang.

Auch organische Fasern können zur Verstärkung von Thermoplasten eingesetzt werden, wenn sie nicht- oder hochschmelzend sind und damit während eines Compoundierprozesses keine durch thermisch initiierte Umwandlungen verursachte Eigenschaftsänderungen eintreten.

Dem Stand der Technik entsprechend werden aus thermoplastischen Polymerwerkstoffen und Füllstoffen oder Verstärkungsmaterialien bestehende Kompositwerkstoffe hergestellt durch intensives Durchmischen mit Compoundiermaschinen, Knetern oder Extrudern und direkt oder nach Granulierung weiter verarbeitet. Übliche Formgebungsverfahren für derartige Kompositwerkstoffe oder Kompositmaterialien sind Thermopressen, Extrudieren und Spritzgiessen.

Neben einem Compoundieren von Thermoplastwerkstoffen mit vorzugsweise anorganischen Füll- oder Verstärkungsmaterialien wird auch versucht, linearkettige und netzwerkbildende Polymerwerkstoffe in Form von sich durchdringenden Netzwerken direkt zu kombinieren, um die Thermoplastwerkstoffe hinsichtlich von Materaleigenschaften wie Elastizitätsmodulen, Wärmeformbeständigkeit und gegebenenfalls Brennverhalten zu optimieren. So werden beispielsweise nach der Druckschrift DE 199 01 419 thermoplastisch verarbeitbare Kunststoffe durch Zugabe von nicht ausgehärteten Reaktivharzen zu Thermoplastschmelzen hergestellt, wobei die Reaktivharze unter Aushärtung mit den Thermoplasten compoundiert werden. Als netzwerkbildende Duromere werden Epoxid-, ungesättigte Polyester-, Furan-, Phenol-, Melamin- und Harnstoffharze (Aminoharze, Aminoplaste) genannt. In konkreten Beispielen werden als Duromere dann jedoch lediglich ungesättigte Polyester und Phenolharze beschrieben.

Im Vergleich zu seit langem vielfältig genutzten und bewährten Verfahren von Thermoplasttailoring durch Compoundieren mit anorganischen Füllstoffen oder Verstärkungsfasern sind Kompositmaterialien auf Basis von Thermoplasten und Duromeren nur wenig bekannt, bislang nur im Zusammenhang mit einer auf einfaches Compoundieren beschränkten Herstellung. Insbesondere sind noch keine derartigen Kompositmaterialien, welche gegenüber mit anorganischen Füllstoffen compoundierten Thermoplasten wegen einer besseren Wiederverwertbarkeit und einer geringeren Abrasion an Herstellungs- und Verarbeitungsgeräten erwünscht sind, bekannt, die bei in gewünschtem Maß erhöhten Elastizitäts- oder Biegemoduln nicht gleichzeitig eine nachteilige Sprödigkeit und reduzierte Zugfähigkeit haben.

Der Erfindung liegt also die Aufgabe zugrunde, thermoplastisch verformbare Kompositmateralien auf Basis thermoplastischer und duromerer Polymere mit hohen Zugfestigkeiten und gegenüber einfachen Thermoplasten erhöhten Zug- oder Biegemoduln sowie reduzierter Brennbarkeit zu entwickeln, wobei ein entsprechendes Herstellungsverfahren so zu gestalten ist, dass die Kompositmaterialien mit möglichst kontinuierlich einstellbaren Eigenschaften und hinsichtlich Komponentenstruktur und Komponentenzusammensetzung in breiter Variabilität erhalten werden können.

Diese Aufgabe wird erfindungsgemäß gelöst durch ein thermoplastisch verformbares Kompositmaterial mit den Merkmalen des Hauptanspruchs und ein Verfahren nach den kennzeichnenden Merkmalen des Anspruchs 8 in Verbindung mit den Merkmalen des Oberbegriffs des Anspruchs 8. Vorteilhafte Ausgestaltungen und Weiterentwicklungen der Erfindung ergeben sich mit den Merkmalen der Unteransprüche.

Ein erfindungsgemäßes Kompositmaterial verbindet vorteilhaft eine gute Verarbeitbarkeit mit einer erhöhten Festigkeit, wobei gegenüber Kunststoffen mit üblichen partikulären Füllstoffen oder mit einer über weite Bereiche vernetzenden Duroplastkomponente hier durch die submikro- bis nanometrischen Duroplastpartikel insbesondere Sprödigkeit sowie Einbußen an Zugfähigkeit und Zähigkeit vermieden werden. Eine damit erzielte Materialoptimierung betrifft im Bereich mechanischer Eigenschaften vor allem Elastizitäts- und Biegemoduln sowie erhöhte Wärmeformbeständigkeiten. Gegenüber unmodifizierten Thermoplasten erhält man gleichzeitig eine durch den Füllstoff vorteilhaft reduzierte Brennbarkeit und verglichen mit Kompositen mit anorganischen Füllstoffen eine deutlich verbesserte Wiederverwertbarkeit und eine effizientere Herstellbarkeit. Dabei kann insbesondere eine bei anorganischen Füllstoffen schwer zu verhindernde Abrasion an einer Herstellungsmaschine vermieden werden.

Das vorgeschlagene In-situ-Verfahren zur Herstellung eines derartigen thermoplastisch verformbaren Kompositmaterials ist besonders effizient, da die Aushärtung des Reaktivharzes in situ während der Compoundierung mit dem thermoplastischen Matrixpolymer erfolgt. Die sehr kleinen Reaktivharzpartikel, vorzugsweise Aminoharz- oder Phenolharzpartikel, entstehen dabei in situ durch Härtung des Harzes während des Vermischens unter möglichst hoher Scherung in einer Maschine hoher Mischungsintensität, vorzugsweise einem kontinuierlich arbeitenden Kneter oder einem Doppelschneckenextruder. Das kann durch gleichzeitige Phasentrennung hydrophob modifizierter schmelzbarer Aminoharze aus der Thermoplastmatrix geschehen.

Das Verfahren ist sehr flexibel bezüglich resultierender Eigenschaften, insbesondere mechanischer Eigenschaften, eines damit hergestellten Kompositmaterials. So lassen sich Kompositmaterialien mit Duroplastpartikeln von in einem weiten Bereich einstellbaren mittleren Partikeldurchmessern realisieren, die Partikelgröße lässt sich einstellen über chemische Struktur von Thermoplastmatrix und Reaktivharz sowie über deren Mengenverhältnis, aber auch über Prozessbedingungen wie Temperatur, Verweilzeit in der verwendeten Maschine, dort beim Vermischen herrschende Scherung; einen Einsatz von Kompatibilisatoren sowie Eigenschaften der verwendeten Maschine, beispielsweise Schneckendesign und L/D-Verhältnis (Länge zu Durchmesser) eines Doppelschneckenextruders oder Knetschaufelform und -anordnung eines Kneters. Damit erzielte Resultate sind reproduzierbar und lassen sich zum einsatzspezifischen Tailoring der Kompositmaterialien gezielt nutzen.

Partikeldurchmesser von zwischen 30 nm und 500 nm sind problemlos und mit hoher Genauigkeit einstellbar, besonders gute Materialeigenschaften im oben beschriebenen Sinn erhält man bei Partikeldurchmessern von zwischen 50 nm und 100 nm. Die Größe der in situ durch Reaktivcompoundierung erzeugten Duroplastpartikel lässt sich am sichersten anhand von rasterelektronenmikroskopischen Aufnahmen von Kryobrüchen des fertigen Kompositmaterials bestimmen.

Infolge einer Erzeugung der Duroplastpartikel mit sehr geringen Partikeldurchmessern während des Vermischens und wegen einer sehr guten Kompatibilität der organischen Partikel zu dem ebenfalls organischen Polymermatrixmaterial lassen sich in weiten Grenzen variierbare Konzentrationen der nano- bis submikroskaligen Duroplastpartikeln in der Matrix realisieren. Insbesondere können problemlos auch sehr hohe Partikelkonzentrationen von bis zu 80 Massenprozent realisiert werden, ohne dass Compoundier-, Verarbeitungs-oder Materialprobleme auftreten. Besonders gute Materialeigenschaften erhält man bei einem Massenanteil der Duroplastpartikel von zwischen 10% und 50% oder bei einer Thermoplastmatrix mit einem Massenanteil von zwischen 50% und 90%.

Durch die reduzierte Brennbarkeit und Wärmeformbeständigkeit eignet sich insbesondere ein melaminharzbasiertes Kompositmaterial hier beschriebener Art für einen Einsatz in Bereichen mit erhöhten brandschutztechnischen Anforderungen. Ein optimiertes Brennverhalten kann man durch einen Zusatz von Flammschutzmitteln erreichen, wobei sich vorzugsweise ökologisch unbedenklich, halogenfreie Flammschutzmittel anbieten. Ein gegenüber reinen Matrixpolymeren signifikant verändertes Brandverhalten erhält man aber bereits durch die als Füllstoff enthaltenen nicht oder schlecht brennbaren bzw. selbstverlöschenden Duroplastpartikel. Während ungefüllte Thermoplastwerkstoffe unter Flammeinwirkung brennend abtropfen, brennen die hier vorgeschlagenen Kompositmaterialien nicht tropfend und mit einer in Abhängigkeit vom Massenanteil der Duroplastpartikel drastisch reduzierten Brenngeschwindigkeit.

Für eine erleichterte Verteilung des Reaktivharzes in der Schmelze sowie zur Materialoptimierung des fertigen Kompositmaterials kann man Kompatibilisatoren (Hartvermittler) einsetzen. Gute Ergebnisse erzielt man bei Zusätzen von Haftvermittlern mit einem Massenanteil von zwischen 1% und 10%, zur Vermeidung einer beeinträchtigten Recyclebarkeit vorzugsweise nicht mehr als 5%.

Das Vermischen bei gleichzeitiger Härtung des Reaktivharzes (Reaktivcompoundierung) kann in üblicher Weise verwendeten Mischeinrichtungen mit steuerbarer hoher Mischungsintensität und kontinuierlicher Arbeitsweise, beispielsweise Gleichlauf-Doppelschnecken-Extrudern oder kontinuierlich arbeitenden Knetern, vorgenommen werden. Eine Verwendung verschiedener Doppelschneckenextruder zeigt, dass Größe und Verteilung der Aminoharzpartikel und damit die mechanischen Materialeigenschaften des resultierenden Kompositmaterials neben den Prozessbedingungen von apparativen Parametern einer verwendeten Ausrüstung determiniert werden. Damit kann die verwendete Maschine hoher Durchmischungsintensität, neben Doppelschneckenextrudern eignen sich dazu auch kontinuierlich arbeitende Kneter, gezielt zur Steuerung der Materialeigenschaften eingesetzt werden. Die Steuerung der Materialeigenschaften kann dabei bei Doppelschneckenextrudern mittels Schneckendesign, Schneckendrehzahl und Heizzonenprofil, bei kontinuierlich arbeitenden Knetern mittels Schaufelform und Schaufelanordnung erfolgen.

Als Matrixkomponenten können Thermoplaste eingesetzt werden mit Schmelz- bzw. Verarbeitungstemperaturen im Bereich einer Temperatur, bei der die thermisch initiierte Härtungsreaktion der Reaktivharze mit ausreichender Geschwindigkeit abläuft, wobei ferner eine ausreichende Kompatibilität der Thermoplaste zur geschmolzenen Aminoharzkomponente erwünscht ist. Damit werden praktisch alle thermoplastischen Polyolefine wie Polyethylen, Polypropylen und seine Copolymere, Polystyren und Polyvinylchlorid umfasst. Bei hydrolyseempfindlichen Massenkunststoffen, wie Polyamiden und Polyestern ist dafür Sorge zu tragen, dass kein hydrolytischer Abbau durch niedermolekulare Reaktionsprodukte der Härtungsreaktion erfolgt. Zur Verhinderung dessen können vorgehärtete Duroplastharze verwendet werden, vorteilhafterweise ist außerdem eine vollständige Abführung der flüchtigen Reaktionsprodukte zu gewährleisten.

Die Verarbeitungstemperaturen sind abhängig von den eingesetzten thermoplastischen Polymerwerkstoffen zu wählen, beispielsweise für Polypropylen vorteilhafterweise zwischen 180°C und 220°C. für Polyamid 6 zwischen 235°C und 260°C.

Für die In-situ-Partikelpildung durch Reaktivcompoudierung können modifizierte und unmodifizierte Amino-und Phenolharze sowie Mischungen solcher in beliebigen Mischungsverhältnissen eingesetzt werden. Mit Blick auf Reaktivität und Kompatibilität mit den zumeist hydrophoben Thermoplasten sowie thermische Stabilität sind bei den Aminoharzen Melaminharze und bei den Phenolharzen solche vom Resol- bzw. Resitoltyp favorisiert. Werden Novolake eingesetzt, so sind zusätzliche Härter wie z.B. Hexamethylentetramin oder Paraformaldehyd erforderlich.

Zur Verwendung als Aminoharzkomponente sind Melamin-Formaldehyd-Harze, die nach bekannten Verfahren gewonnen oder als kommerzielle Produkte erhalten werden können, besonders geeignet. Dabei sind kommerziell verfügbare Melamin-Formaldehyd-Harze sowohl in Handelsform, als auch nach spezifischen chemischen Modifizierungen, vorzugsweise Acetalisierungen anwendbar. Daneben sind auch stärker modifizierte Melaminharze mit partieller Einführung anderer Amin-, Aldehyd- oder Alkoholkomponenten zur Reaktivcompoundierung einsetzbar. Geeignete Modifizierungskomponenten sind beispielsweise Benzoguanamin und Acrylamid, Polyethylenglykole unterschiedlicher Molmassen, Alkanole mit zwischen einem und fünf C-Atomen sowie Glyoxal und Glutardialdehyd.

Als Ausgangsmaterial für die Duroplastpartikel können auch monomere Ausgangskomponenten des entsprechenden Reaktiv- bzw. Aminoharzes verwendet werden. Insbesondere kann die Aminoharzkomponente bei einer Verwendung von Melamin-Formaldehyd-Harzen auch in Form von Melamin und Formaldehyd, letzteres vorzugsweise in Form von Paraformaldehyd, als Ausgangskomponenten zur Reaktivcompoundierung eingesetzt werden, so dass das für eine Bildung der Aminoharzpartikel erforderliche Harz in situ als Zwischenprodukt gebildet wird.

Die Reaktivharzkomponente kann in beliebiger Form zusammen mit dem als Granulat oder Pulver vorliegenden thermoplastischen Polymerwerkstoff dem Extruder oder Kneter zugeführt werden. Besonders vorteilhaft ist es, die Harze in Form sprühgetrockneter Pulver oder als flüssige methylveretherte Harze zu dosieren. In bevorzugten Ausführungsformen des Verfahren werden wenige flüchtige Raktionsprodukte liefernde, granulierte und vorgehärtete schmelzbare Melaminharze als partikelbildende. Harzkomponente eingesetzt.

Eng verknüpft mit der Komponentenzusammenset zung sind nicht nur die Eigenschaften des als Endprodukt erhaltenen Kompositmaterials, sondern auch die Verarbeitungseigenschaften des reaktivharzgefüllten thermoplastischen Polymerwerkstoffs. Insbesondere ergibt sich eine von der genauen Zusammensetzung abhängige Schmelzviskosität. Ein mit dieser Erfindung vorgeschlagenes Material kann damit nicht nur hinsichtlich der Eigenschaften des.Endprodukts modifiziert werden, sondern es ist auch möglich, es mit Blick auf einen Verarbeitungsprozesse, beispielsweise durch Thermopressen, Extrusion oder Spritzgießen, in seinen Fließeigenschaften anzupassen.

Bevorzugte Einsatzfelder für hiermit vorgeschlagene Kompositmaterialien finden sich in vielen Bereichen, beispielsweise in Transportmitteln sowie in Elektrik und Elektronik, bei denen neben mechanischen Materialeigenschaften auch ein unkritisches Verhalten bei Hitze- und Flammeinwirkung einsatzentscheidend ist.

Beispiele für erfindungsgemäße Kompositmaterialien werden in den nachfolgenden Beispielen 1 bis 15 beschrieben. Die erfindungsgemäß hergestellten Kompositmaterialien wurden hinsichtlich Verarbeitungs- und Materialeigenschaften mittels Schmelzerheometrie, Elektronenmikroskopie sowie hinsichtlich Zug-, Dehnungs- und Brennverhalten untersucht und umfassend charakterisiert.

Die Schmelzviskosität wurde für die Kompositmaterialien wie für die entsprechenden Ausgangsmaterialien mit dem Rheometer MC 120 der Fa. Physica mit der Auswertesoftware US 200 und einem Messsystem Platte/Platte (Durchmesser 25 mm bei 1 mm Plattenabstand) mit einem vorgewählten Drehmoment von 3 mNm und einer Frequenz von 5 Hz ermittelt. Dabei wurde für eine Polypropylenmatrix bei 200°C, für Polyamid 6 bei 240°C gemessen.

Das granulierte Kompositmaterial wurde auf einer Spritzgießmaschine nach ISO 294 zu Normprüfkörpern Typ A entsprechend ISO 3167 weiter verarbeitet. Nach Angleichung der Prüfkörper in einem Normalklima (20°C, 50% relative Feuchte) wurden die Werte für Zugfestigkeit, Bruchdehnung und Elastizitätsmoduln auf einer Universalprüfmaschine der Fa. Zwick entsprechend ISO 527 bestimmt.

Die Partikelgröße von durch Aushärten eines Reaktivharzes beim Vermischen mit einem als Matrix dienenden thermoplastischen Polymerwerkstoff als Füllstoff entstandenen Reaktivharz- bzw. Duroplastpartikeln wurde anhand von rasterelektronenmikroskopischen Aufnahmen einer Bruchfläche von durch Spritzguss erhaltenen, auf -180°C gekühlten und gebrochenen Formkörpern aus dem entsprechenden Kompositmaterial bestimmt.
Glühstabprüfungen wurden nach DIN VDE 0304 Teil 3 "Thermische Eigenschaften von Elektroisolierstoffen - Entflammbarkeit bei Einwirkung von Zündquellen" (September 1985), einem mit IEC 707, Ausgabe 1981 identischen Prüfverfahren, entsprechend dem Verfahren BH "Glühstab - waagerechter Probekörper" durchgeführt..

Die aufgeführten Beispiele erläutern die Erfindung:

### Beispiel 1

Eine mittels Zwangsmischer aus 70% Massenanteilen von auf 1 mm Korngröße gemahlenem Polypropylengranulat (BASF Novolen 1100 L) mit einem Schmelzindex von 12g/10min (bei einer Menge von 5 kg und einer Temperatur von 190°C) und einer Schmelzviskosität von 1400 Pa.s und 30% Massenanteilen eines sprühgetrockneten MF-Harzes (Melamin-Formaldehyd-Harzes, hier Kauramin von BASF) hergestellte Pulvermischung wird in die Einzugsöffnung eines gleichsinnig drehenden Doppelschneckenextruders (Leistritz - DS - MICRO 18/35 D) mit mittelstark mischender Schnecke (9 Knetelemente) gegeben, bei einer Schneckendrehzahl von 300 s⁻¹ und 160 bis 200°C compoundiert und granuliert. Die Schmelzviskosität des so gewonnenen Granulates wurde bestimmt sowie an durch Spritzguss hergestellten Normprüfkörpern die Werte für Zugfestigkeit, Höchstdehnung bei Bruch und Elastizitäts-Modul (E-Modul) ermittelt. Wie auch bei allen folgenden Beispielen sind die Ergebnisse nachstehend tabellarisch aufgelistet.

| | |
|---|---|
| Schmelzviskosität : | 910 Pa·s |
| Zugfestigkeit : | 24,3 MPa |
| Bruchdehnung : | 10,2% |
| E-Modul : | 1,40 GPa |
| Partikelgröße : | 500 nm |

### Beispiel 2

Analog zu Beispiel 1 werden unter Zusatz von 5% Massenanteilen des Haftvermittlers Scona® TPPP 2110 FA (BSL Schkopau) 65% Massenanteile Polypropylen Novolen 1100 L und 30% Massenanteile MF-Harz Kauramin in einem Doppelschneckenextruder Leistritz - DS - MICRO 18/35 D reaktiv compoundiert und über Spritzguss verarbeitet.

| | |
|---|---|
| Schmelzviskosität : | 500 Pa·s |
| Zugfestigkeit : | 30,4 MPa |
| Bruchdehnung : | 5,9% |
| E-Modul : | 1,65 GPa |
| Partikelgröße : | 100 nm |

### Beispiel 3

Polypropylengranulat Novolen 1100 L und eine mittels Zwangsmischer aus sprühgetrocknetem MF-Harz Kauramin und dem Haftvermittler Scona® TPPP 2110 FA hergestellte Pulvermischung werden getrennt über zwei Dosierwaagen einem gleichsinnig drehenden Doppelschneckenextruder (Brabender - DS - Extruder DSE 25/36 D) mit stark mischender Schnecke (je 4 Förder- und Knetzonen abwechselnd) bei einer Schneckendrehzahl von 300 s⁻¹ und eine Temperatur von 160°C bis 200°C so zugeführt, dass nach der Compoundierung ein Granulat mit 65% Massenanteilen PP, 30% Massenanteilen Harz und 5% Massenanteilen Haftvermittler erhalten wird. Das füllstoffhaltige Granulat wird mittels Spritzgießen zu Normprüfkörpern verformt. Das Material erweist sich bei der Glühstabprüfung nach DIN VDE 0304 als nichttropfend gegenüber Polypropylen, das brennend abtropft.

| | |
|---|---|
| Schmelzviskosität : | 500 Pa·s |
| Zugfestigkeit : | 31,8 MPa |
| Bruchdehnung : | 6,4% |
| E-Modul : | 1,50 GPa |
| Partikelgröße : | 100 nm |
| Brenngeschwindigkeit : | 16 mm/min. |

### Beispiel 4

Analog zu Beispiel 3 wird mit verändertem Komponentenverhältnis von 45% Massenanteilen Polypropylen Novolen 1100 L, 50% Massenanteilen MF-Harz und 5% Massenanteilen Haftvermittler Scona® TPPP 2110 FA in einem Doppelschneckenextruder Brabender - DS - Extruder DSE 25/36 D ein Komposit hergestellt und über Spritzguss verarbeitet.

| | |
|---|---|
| Schmelzviskosität : | 480 Pa·s |
| Zugfestigkeit : | 34,4 MPa |
| Bruchdehnung : | 3,9% |
| E-Modul : | 1,90 GPa |
| Partikelgröße : | 60 nm |

### Beispiel 5

Analog zu Beispiel 3.wird mit verändertem Komponentenverhältnis von 25% Massenanteilen Polypropylen Novolen 1100 L, 70% Massenanteilen MF-Harz und 5% Massenanteilen Haftvermittler Scona® TPPP 2110 FA in einem Doppelschneckenextruder Brabender - DS - Extruder DSE 25/36 D ein Komposit hergestellt und über Spritzguss verarbeitet. Das Material erweist sich bei einer Glühstabprüfung nach DIN VDE 0304 als nichttropfend.

| | |
|---|---|
| Schmelzviskosität : | 5770 Pa·s |
| Zugfestigkeit : | 28,4 MPa |
| Bruchdehnung : | 2,7% |
| E-Modul : | 2,20 GPa |
| Partikelgröße : | 120 nm |
| Brenngeschwindigkeit : | 7 mm/min |

### Beispiel 6

Analog zu Beispiel 3 werden Polypropylengranulat Novolen 1100 L und eine mittels Zwangsmischer hergestellte Pulvermischung, bestehend aus einem nach der Druckschrift DE 100 56 398 vorgehärteten Melaminharz und dem Haftvermittler Polybond® 3002 (Uniroyal Chem.), getrennt über zwei Dosierwaagen einem gleichsinnig drehenden Doppelschneckenextruder (Brabender - DS - Extruder DSE 25/36 D) mit stark mischender Schnecke bei einer Schneckendrehzahl von 300 s⁻¹ und einem Temperaturprofil von 160°C bis 200°C so zugeführt, dass nach der Compoundierung ein Granulat mit 65% Massenanteilen PP, 30% Massenanteilen Harz und 5% Massenanteilen Haftvermittler erhalten wird.

| | |
|---|---|
| Schmelzviskosität : | 1200 Pa·s |
| Zugfestigkeit : | 36,5 MPa |
| Bruchdehnung : | 5,1% |
| E-Modul : | 2,28 GPa |
| Partikelgröße : | 30 nm |
| Brenngeschwindigkeit : | 5 mm/min |

### Beispiel 7

Analog zu Beispiel 6 wird ein melaminharz-gefülltes Polypropylen in Gegenwart von 5% Massenanteilen eines anderen Haftvermittlers, nämlich Hostamont® TP AR 504 (Clariant), hergestellt und verarbeitet.

| | |
|---|---|
| Schmelzviskosität : | 1480 Pa·s |
| Zugfestigkeit : | 34,0 MPa |
| Bruchdehnung : | 4,6% |
| E-Modul : | 2,21 GPa |
| Partikelgröße : | 50 nm |

### Beispiel 8

65% Massenanteile eines stabilisatorhaltigen Polypropylenpulvers (Borealis) mit einer hoher Schmelzviskosität von 2400 Pa·s werden mittels eines Zwangsmischers mit 30% Massenanteilen eines sprühgetrockneten Melamin-Formaldehyd-Harzes Lamelite 200 und 5% Massenanteilen des Haftvermittler Scona® TPPP 2110 FA vermischt und im Doppelschneckenextruder Leistritz - DS - MICRO 18/35 D mit modifizierter Schneckenkonfiguration (vordere Heizzonen: hohe Scherung, hintere Heizzonen : geringe Scherung) reaktiv compoundiert und granuliert. Das Granulat wird mittels Spritzgießen zu Prüfkörpern verformt .

| | |
|---|---|
| Schmelzviskosität : | 6600 Pa·s |
| Zugfestigkeit : | 30,0 MPa |
| Bruchdehnung : | 3,4% |
| E-Modul : | 1,81 GPa |

### Beispiel 9

Aus Lamelite 200 hergestelltes methylverethertes Melaminharz wird flüssig mit stabilisatorhaltigem Polypropylenpulver, das den Haftvermittler Hostamont® TP AR 504 enthält, in die Einzugsöffnung eines gleichdrehenden Doppelschneckenextruders (Leistritz - DS - MICRO 18/35D) mit über die gesamte Länge stark mischender Schnecke dosiert und bei einer Schneckendrehzahl von 300 s⁻¹ und einem Temperaturprofil von 160°C bis 200°C compoundiert und granuliert. Das resultierende Kompositmaterial enthält 32% Massenanteile Harz und 2% Massenanteile Haftvermittler.

| | |
|---|---|
| Schmelzviskosität : | 1520 Pa·s |
| Zugfestigkeit : | 34,3 MPa |
| Bruchdehnung : | 12,8% |
| E-Modul : | 1,14 GPa |

### Beispiel 10

Ein Synthesegemisch aus 31% Massenanteilen Paraformaldehyd, 63% Massenanteilen Melamin und 6% Massenanteilen Polyvinylalkohol (45 000 g/mol) werden mittels eines Zwangsmischers mit stabilisatorhaltigem Polypropylenpulver hoher Schmelzviskosität zu einem Gemisch mit einem Verhältnis von 30% Massenanteilen Synthesegemisch zu 70% Massenanteilen Polypropylen vermischt. Diese Mischung wird in die Einzugsöffnung eines gleichsinnig drehenden Doppelschneckenextruders Leistritz - DS - MICRO 18/35D mit anfangs stark, dann wenig mischender Schnecke gegeben, bei einer Schneckendrehzahl von 300 s⁻¹ und 160°C bis 200°C compoundiert und granuliert.

| | |
|---|---|
| Schmelzviskosität : | 2700 Pa·s |
| Zugfestigkeit : | 32,6 MPa |
| Bruchdehnung : | 6,0% |
| E-Modul : | 1,51 GPa |

### Beispiel 11

Analog zu Beispiel 10 wird ein Kompositgranulat mit. über die gesamte Länge stark mischender Schnecke hergestellt.

| | |
|---|---|
| Schmelzviskosität : | 4860 Pa·s |
| Zugfestigkeit : | 36,1 MPa |
| Bruchdehnung : | 8,9% |
| E-Modul : | 1,24 GPa |

### Beispiel 12

Eine mittels Zwangsmischer hergestellte Pulvermischung, bestehend aus 80% Massenanteilen von auf 1 mm Korngröße gemahlenem Polyamid 6 (BASF Ultramid B 3) mit einem Schmelzindex von 110g/10min (bei einer Menge von 5 kg und einer Temperatur von 275°C) und einer Schmelzviskosität von 900 Pa·s und 20% Massenanteilen eines gemäß der Druckschrift DE 100 56 398 vorgehärteten Melaminharzes, werden in die Einzugsöffnung eines gleichsinnig drehenden Doppelschneckenextruders Brabender - DS - Extruder DSE 25/36 D mit stark mischender Schnecke (je 4 Förder- und Knetzonen abwechselnd) bei einer Schneckendrehzahl von 300 s⁻¹ und 240°C compoundiert und granuliert.

| | |
|---|---|
| Schmelzviskosität : | 570 Pa·s |
| Zugfestigkeit : | 39,0 MPa |
| Bruchdehnung : | 1,9% |
| E-Modul : | 2,70 GPa |

### Beispiel 13

Polypropylengranulat Novolen 1100 L und eine mittels Zwangsmischer aus einem gemahlenen benzoguanaminmodifizierten MF-Harz (Melamin: 70 Mol-%, Benzoguanamin: 30 Mol-%) und dem Haftvermittler Scona® TPPP 2110 FA hergestellte Pulvermischung werden getrennt über zwei Dosierwaagen einem gleichsinnig drehenden Doppelschneckenextruder (Brabender - DS - Extruder DSE 25/36 D) mit stark mischender Schnecke (je 4 Förder- und Knetzonen abwechselnd) bei einer Schneckendrehzahl von 300 s⁻¹ und einem Temperaturprofil von 160°C bis 200°C so zugeführt, dass nach der Compoundierung ein Granulat mit 65% Massenanteilen Polypropylen, 30% Massenanteilen Harz und 5% Massenanteilen Haftvermittler erhalten wird. Das füllstoffhaltige Granulat wird mittels Spritzgießen zu Normprüfkörpern verformt.

| | |
|---|---|
| Schmelzviskosität : | 1500 Pa·s |
| Zugfestigkeit : | 35,8 MPa |
| Bruchdehnung : | 6,4% |
| E-Modul : | 2,30 GPa |
| Partikelgröße : | 50 nm |

### Beispiel 14

Polypropylengranulat Novolen 1100 L und eine mittels Zwangsmischer aus gemahlenem Phenolharz PF 31S (Bakelite AG) und dem Haftvermittler Scona® TPPP 2110 FA hergestellte Pulvermischung werden getrennt über zwei Dosierwaagen einem gleichsinnig drehenden Doppelschneckenextruder (Brabender - DS - Extruder. DSE 25/36 D) mit stark mischender Schnecke (je 4 Förder-und Knetzonen abwechselnd) bei einer Schneckendrehzahl von 300 s⁻¹ und einem Temperaturprofil von 160°C bis 200°C so zugeführt, dass nach der Compoundierung ein Granulat mit 65% Massenanteilen Polypropylen, 30% Massenanteilen Harz und 5% Massenanteilen Haftvermittler erhalten wird. Das füllstoffhaltige Granulat wird mittels Spritzgießen zu Normprüfkörpern verformt.

| | |
|---|---|
| Schmelzviskosität : | 700 Pa·s |
| Zugfestigkeit : | 33,1 MPa |
| Bruchdehnung : | 5,4% |
| E-Modul : | 1,50 GPa |
| Partikelgröße : | 100 nm |

### Beispiel 15

Analog zu Beispiel 14 werden Polypropylengranulat Novvolen 1100 L und eine Mischung von Resol Fl 38 und dem Haftvermittler Polybond® 3002 (Uniroyal Chemie) getrennt Über zwei Dosierwaagen einem gleichsinnig drehenden Doppelschneckenextruder (Brabender - DS - Extruder DSE 25/36 D) mit stark mischender Schnecke bei einer Schneckendrehzahl von 300 s⁻¹ und einem Temperaturprofil von 160°C bis 200°C so zugeführt, dass nach der Compoundierung ein Granulat mit 96,5% Massenanteilen Polypropylen, 3% Massenanteilen Harz und 0,5% Massenanteilen Haftvermittler erhalten wird.

| | |
|---|---|
| Schmelzviskosität : | 1200 Pa·s |
| Zugfestigkeit : | 36,5 MPa |
| Bruchdehnung : | 11,1% |
| E-Modul : | 0,78 GPa |
| Partikelgröße : | 30 nm |

Neben Haftvermittlern aus den Produktfamilien Scona® (BSL Schkopan/Dow Chem.), Hostamont® (Clariant) und Polybond® (Uniroyal Chem.) eigenen sich auch solche der Familie Fusabond® (DuPont), also eine Vielzahl zur Verfügung stehender kommerzieller Produkte. Besonders wirksam sind Materialien mit niedriger Schmelzviskosität wie beispielsweise Polybond® Pb 3200 oder Hostamont® TP AR 504.

Die folgende tabellenartige Darstellung schließlich veranschaulicht ein beispielhaftes Schneckendesign eines für ein erfindungsgemäßes Herstellungsverfahren verwendeten Extruders:

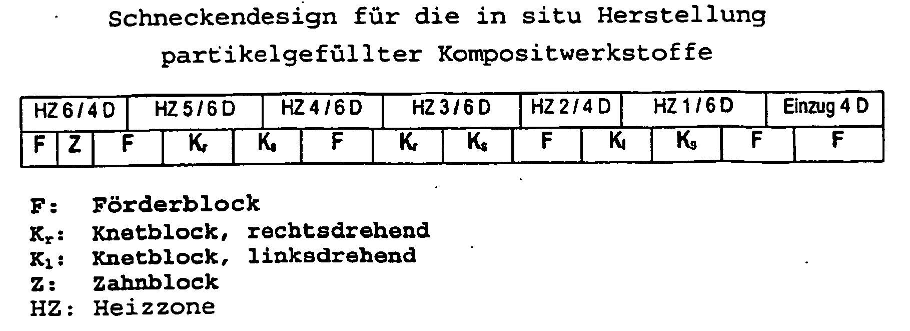

Diese Tabelle zeigt verschiedene Abschnitte des Extruders, die von den Bestandteilen des entstehenden Kompositmaterials von rechts nach links durchlaufen werden. Die einzelnen Abschnitte haben Funktionen, welche durch die darunter stehenden Legende erläutert werden, und werden durch sechs Heizzonen (HZ1 bis HZ6) abgedeckt, deren Länge in der Tabelle in Vielfachen des Schneckendurchmessers D angegeben ist.

## Patentansprüche

1. Thermoplastisch verformbares Kompositmaterial mit einer aus thermoplastischem Polymerwerkstoff bestehenden Matrix und einem duroplastischen Füllstoff aus zumindest teilweise ausgehärtetem Reaktivharz,
**dadurch gekennzeichnet, dass** der Füllstoff aus nano- bis submikroskaligen Duroplastpartikeln besteht.

2. Thermoplastisch verformbares Kompositmaterial nach Anspruch 1, **dadurch gekennzeichnet, dass** das Reaktivharz aus Aminoharz und/oder Phenolharz besteht.

3. Thermoplastisch verformbares Kompositmaterial nach einem der Ansprüche 1 oder 2, **dadurch gekennzeichnet, dass** die Duroplastpartikel Partikeldurchmesser von zwischen 30 nm und 500 nm, vorzugsweise zwischen 50 nm und 100 nm haben.

4. Thermoplastisch verformbares Kompositmaterial nach einem der Ansprüche 1 bis 3, **dadurch gekennzeichnet, dass** der thermoplastische Polymerwerkstoff Polyolefine, Polyester und/oder Polyamide enthält.

5. Thermoplastisch verformbares Kompositmaterial nach einem der Ansprüche 1 bis 4, **dadurch gekennzeichnet, dass** die Duroplastpartikel aus Melaminharz, vorzugsweise aus unmodifiziertem, modifiziertem, teilverethertem oder vollverethertem Melamin-Formaldehyd-Harz bestehen.

6. Thermoplastisch verformbares Kompositmaterial nach einem der Ansprüche 1 bis 5, **dadurch gekennzeichnet, dass** es eine Thermoplastkomponente mit einem Massenanteil von zwischen 20% und 90%, vorzugsweise zwischen 50% und 90% und/oder eine Reaktivharzkomponente mit einem Massenanteil von zwischen 10% und 80%, vorzugsweise zwischen 10% und 50% enthält.

7. Thermoplastisch verformbares Kompositmaterial nach einem der Ansprüche 1 bis 6, **dadurch gekennzeichnet, dass** es geringe Zusätze von vorzugsweise halogenfreien Flammschutzmitteln und/oder Haftvermittlern enthält, letztere vorzugsweise mit einem Massenanteil von zwischen 1% und 10%, besonders vorzugsweise zwischen 2% und 5%.

8. Verfahren zur Herstellung eines thermoplastisch verformbaren Kompositmaterials mit einer aus thermoplastischem Polymerwerkstoff bestehenden Matrix und einem duroplastischen Füllstoff durch Vermischen des thermoplastischen Polymerwerkstoffs mit einem härtbaren Reaktivharz in einer Schmelze,
**dadurch gekennzeichnet,**
**dass** während des Vermischens in einer Maschine hoher Mischungsintensität, vorzugsweise einem Doppelschneckenextruder oder einem kontinuierlich arbeitenden Kneter, durch gleichzeitige Härtung des Reaktivharzes als Füllstoff nanobis submikroskalige Duroplastpartikel entstehen.

9. Verfahren nach Anspruch 8, **dadurch gekennzeichnet, dass** als Reaktivharz ein Aminoharz und/oder Phenolharz verwendet wird.

10. Verfahren nach einem der Ansprüche 8 oder 9, **dadurch gekennzeichnet, dass** die Duroplastpartikel mit Partikeldurchmessern von zwischen 30 nm und 500 nm, vorzugsweise zwischen 50 nm und 100 nm gebildet werden.

11. Verfahren nach einem der Ansprüche 8 bis 10, **dadurch gekennzeichnet, dass** als thermoplastischer Polymerwerkstoff Polyolefine, Polyester und/oder Polyamide eingesetzt werden.

12. Verfahren nach einem der Ansprüche 8 bis 11, **dadurch gekennzeichnet, dass** als Auszugsmaterial für die Duroplastpartikel Melaminharze, vorzugsweise unmodifizierte, modifizierte, teilveretherte oder vollveretherte Melamin-Formaldehyd-Harze eingesetzt werden.

13. Verfahren nach Anspruch 12, **dadurch gekennzeichnet, dass** das Ausgangsmaterial für die Duroplastpartikel in Form von Ausgangskomponenten Melamin und Formaldehyd, letzteres vorzugsweise in Form von Paraformaldehyd, zugeführt wird und sich das Melamin-Formaldehyd-Harz beim Vermischen als Zwischenprodukt bildet.

14. Verfahren nach einem der Ansprüche 8 bis 13, **dadurch gekennzeichnet, dass** als Ausgangsmaterial für die Duroplastpartikel monomere Ausgangskomponenten des Reaktivharzes eingesetzt werden.

15. Verfahren nach einem der Ansprüche 8 bis 14, **dadurch gekennzeichnet, dass** flüssige, spritzgetrocknete oder schmelzbare Reaktivharze oder Ausgangskomponenten von Reaktivharzen als Ausgangssprodukt für die Duroplastpartikel verwendet werden.

16. Verfahren nach einem der Ansprüche 8 bis 15, **dadurch gekennzeichnet, dass** das Vermischen bei einer Temperatur von zwischen 160°C und 270°C stattfindet, wobei in der verwendeten Maschine vorzugsweise ein Temperaturprofil mit Temperaturdifferenzen von zwischen 20°C und 50°C vorliegt.

17. Verfahren nach einem der Ansprüche 8 bis 16, **dadurch gekennzeichnet, dass** für eine verbesserte Vermischung der Schmelze Haftvermittler zugesetzt werden, vorzugsweise mit einem Massenanteil von zwischen 1% und 10%, besonders vorzugsweise zwischen 2% und 5%.

18. Verfahren nach einem der Ansprüche 8 bis 17, **dadurch gekennzeichnet, dass** der Schmelze geringe Mengen eines vorzugsweise halogenfreien Flammschutzmittels zugesetzt werden, vorzugsweise mit einem Massenanteil von zwischen 1% und 5%..

## Claims

1. Thermoplastically deformable composite material having a matrix, which comprises thermoplastic polymer material, and a duroplastic filler made of at least partially cured reactive resin,
**characterised in that**
the filler comprises nano- to submicroscalc duroplast particles.

2. Thermoplastically deformable composite material according to claim 1, **characterised in that** the reactive resin comprises amino resin and/or phenol resin.

3. Thermoplastically deformable composite material according to one of the claims 1 or 2, **characterised in that** the duroplast particles have particle diameters of between 30 nm and 500 nm, preferably between 50 nm and 100 nm.

4. Thermoplastically deformable composite material according to one of the claims 1 to 3, **characterised in that** the thermoplastic polymer material contains polyolefins, polyesters and/or polyamides.

5. Thermoplastically deformable composite material according to one of the claims 1 to 4, **characterised in that** the duroplast particles comprise melamine resin, preferably unmodified, modified, partially etherified or completely etherified melamine-formaldehyde resin.

6. Thermoplastically deformable composite material according to one of the claims 1 to 5, **characterised in that** it contains a thermoplast component with a mass proportion of between 20% and 90%, preferably between 50% and 90% and/or a reactive resin component with a mass proportion of between 10% and 80%, preferably between 10% and 50%.

7. Thermoplastically deformable composite material according to one of the claims 1 to 6, **characterised in that** it contains small supplements of preferably halogen-free flameproofing agents and/or bonding agents, the latter preferably with a mass proportion of between 1% and 10%, particularly preferred between 2% and 5%.

8. Method for producing a thermoplastically deformable composite material having a matrix, which comprises thermoplastic polymer material, and a. duroplastic filler by mixing the thermoplastic polymer material with a. curable reactive resin in a melt,
**characterised in that**,
during mixing in a high mixing intensity machine, preferably a twinscrew extruder or a continuously operating kneader, by means of simultaneous curing of the reactive resin as filler, nano- to submicroscale duroplast particles are produced.

9. Method according to claim 8, **characterised in that** an amino resin and/or phenol resin is used as reactive resin.

10. Method according to one of the claims 8 or 9, **characterised in that** the duroplast particles are formed with particle diameters of between 30 nm and 500 nm, preferably between 50 nm and 100 nm.

11. Method according to one of the claims 8 to 10, **characterised in that** polyolefins, polyesters and/or polyamides are used as thermoplastic polymer material.

12. Method according to one of the claims 8 to 11, **characterised in that** melamine resins, preferably unmodified, modified, partially etherified or completely etherified melamine-formaldehyde resins are used as the extraction material for the duroplast particles.

13. Method according to claim 12, **characterised in that** the initial material for the duroplast particles is supplied in the form of initial components melamine and formaldehyde, the latter preferably in the form of paraformaldehyde, and the melamine-formaldchyde resin is formed as intermediate product during mixing.

14. Method according to one of the claims 8 to 13, **characterised in that** monomer initial components of the reactive resin are used as initial material for the duroplast particles.

15. Method according to one of the claims 8 to 14, **characterised in that** liquid, spray-dried or meltable reactive resins or initial components of reactive resins are used as initial product for the duroplast particles.

16. Method according to one of the claims 8 to 15, **characterised in that** mixing takes place at a temperature of between 160°C and 270°C, preferably a temperature profile with temperature differences of between 20°C and 50°C being present in the machine which is used.

17. Method according to one of the claims 8 to 16, **characterised in that** bonding agents are added for improved mixing of the melt, preferably with a mass proportion of between 1% and 10%, particularly preferred between 2% and 5%.

18. Method according to one of the claims 8 to 17, **characterised in that** small quantities of a preferably halogen-free flameproofing agent are added to the melt, preferably with a mass proportion of between 1% and 5%.

## Revendications

1. Matériau composite thermoplastique déformable comprenant une matrice constituée de matière polymère thermoplastique et une matière de charge thermodurcissable constituée de résine réactive au moins partiellement cuite,
**caractérisé en ce que**
la matière de charge est constituée de particules thermodurcissables nanoscopiques ou submicroscopiques.

2. Matériau composite thermoplastique déformable selon la revendication 1,
**caractérisé en ce que**
la résine réactive est constituée de résine amine et/ou de résine phénolique.

3. Matériau composite thermoplastique déformable selon l'une des revendications 1 ou 2,
**caractérisé en ce que**
les particules thermodurcissables ont un diamètre de particule de 30 nm à 500 nm, de préférence de 50 nm à 100 nm.

4. Matériau composite thermoplastique déformable selon l'une des revendications 1 à 3,
**caractérisé en ce que**
la matière polymère thermoplastique contient des polyoléfines, des polyesters et/ou des polyamides.

5. Matériau composite thermoplastique déformable selon l'une des revendications 1 à 4,
**caractérisé en ce que**
les particules thermodurcissables sont constituées de résine de mélamine, de préférence de résine de mélamine-formaldéhyde non modifiée, modifiée, partiellement éthérifiée ou totalement éthérifiée.

6. Matériau composite thermoplastique déformable selon l'une des revendications 1 à 5,
**caractérisé en ce qu'**
il contient un composant thermoplastique dans une proportion en masse de 20 % à 90 %, de préférence de 50 % à 90 %, et un composant de résine réactive dans une proportion en masse de 10 % à 80 %, de préférence de 10 % à 50 %.

7. Matériau composite thermoplastique déformable selon l'une des revendications 1 à 6,
**caractérisé en ce qu'**
il contient de faibles additions d'agents ignifuges de préférence non halogénés et/ou d'agents adhésifs, ces derniers de préférence dans une proportion en masse de 1 % à 10 %, de préférence de 2 % à 5 %.

8. Procédé pour fabriquer un matériau composite thermoplastique déformable comprenant une matrice constituée de matière polymère thermoplastique et une matière de charge thermodurcissable en mélangeant la matière polymère thermoplastique avec une résine réactive durcissable dans une fonte,
**caractérisé en ce que**
pendant le mélange dans une machine à haute intensité de mélange, de préférence une boudineuse à deux vis ou une pétrisseuse continue, on produit par le durcissement simultané de la résine réactive, des particules thermodurcissables nanoscopiques ou submicroscopiques.

9. Procédé selon la revendication 8,
**caractérisé en ce que**
comme résine réactive on utilise une résine amine et/ou une résine phénolique.

10. Procédé selon l'une des revendications 8 ou 9,
**caractérisé en ce que**
les particules thermodurcissables ont un diamètre de particule de 30 nm à 500 nm, de préférence de 50 nm à 100 nm.

11. Procédé selon l'une des revendications 8 à 10,
**caractérisé en ce que**
comme matière polymère thermoplastique on utilise des polyoléfines, des polyesters et/ou des polyamides.

12. Procédé selon l'une des revendications 8 à 11,
**caractérisé en ce que**
comme matière première pour les particules thermodurcissables, on utilise des résines de mélamine, de préférence des résines de mélamine-formaldéhyde non modifiées, modifiées, partiellement éthérifiées ou totalement éthérifiées.

13. Procédé selon la revendication 12,
**caractérisé en ce qu'**
on ajoute la matière première pour les particules thermodurcissables sous forme de composants de départ mélamine et formaldéhyde, ce dernier de préférence sous forme de paraformalhéhyde, et on forme la résine de mélamine-formaldéhyde lors du mélange sous forme de produit intermédiaire.

14. Procédé selon l'une des revendications 8 à 13,
**caractérisé en ce que**
comme matière première pour les particules thermodurcissables on utilise des composants de départ monomères de la résine réactive.

15. Procédé selon l'une des revendications 8 à 14,
**caractérisé en ce que**
comme produit de départ pour les particules thermodurcissables on utilise des résines réactives ou des composants de départ de résines réactives liquides, séchés par pulvérisation ou fusibles.

16. Procédé selon l'une des revendications 8 à 15,
**caractérisé en ce que**
le mélange a lieu à une température de 160°C à 270°C, un profil de température avec des différences de température de 20°C à 50°C régnant de préférence dans la machine utilisée.

17. Procédé selon l'une des revendications 8 à 16,
**caractérisé en ce que**
pour améliorer le mélange de la fonte, on ajoute des agents adhésifs, de préférence dans une proportion en masse de 1 % à 10 %, de préférence de 2% à 5%.

18. Procédé selon l'une des revendications 8 à 17,
**caractérisé en ce qu'**
on ajoute à la fonte de faibles quantités d'un agent ignifuge de préférence non halogéné, de préférence dans une proportion en masse de 1 % à 5 %.
